# EUROPEAN PATENT SPECIFICATION

(11) **EP 4 332 834 B1**
(45) Date of publication and mention of the grant of the patent: **13.08.2025**
(21) Application number: 22290052.4
(22) Date of filing: 29.08.2022
(51) Int. Cl.: G06N 3/02, G06T 5/00, H04N 23/81

(54) **METHOD AND CAMERA DEVICE FOR GENERATING A MOIRÉ-CORRECTED IMAGE FILE**
VERFAHREN UND KAMERAVORRICHTUNG ZUR ERZEUGUNG EINER MOIRÉ-KORRIGIERTEN BILDDATEI
PROCÉDÉ ET DISPOSITIF DE CAMÉRA POUR GÉNÉRER UN FICHIER D'IMAGE CORRIGÉ EN MOIRÉ

(43) Date of publication of application: 06.03.2024
(73) Proprietor: Beijing Xiaomi Mobile Software Co., Ltd., Beijing 100085 (CN)
(72) Inventor: Karpushin, Maxim, 92100 Boulogne-Billancourt (FR); Neveu, Balthazar, 92100 Boulogne-Billancourt (FR); Tarchouna, Imène, 92100 Boulogne-Billancourt (FR)
(74) Representative: dompatent von Kreisler Selting Werner - Partnerschaft von Patent- und Rechtsanwälten mbB

(56) References cited:
- KR-A- 20200 084 419
- US-A1- 2022 132 001
- BOLIN LIU ET AL: "Demoireing of Camera-Captured Screen Images Using Deep Convolutional Neural Network", ARXIV.ORG, CORNELL UNIVERSITY LIBRARY, 201 OLIN LIBRARY CORNELL UNIVERSITY ITHACA, NY 14853, 11 April 2018 (2018-04-11), XP080869609

## Description

### Technical field

The present invention relates to the technical field of image processing. In particular, the present invention relates to a method for generating a moiré-corrected image file and a corresponding camera device. Furthermore, the present invention may also be applied in the technical field of video processing and for display technologies.

### Background

Many camera devices face the problem of artefacts commonly known as moiré patterns. In particular, modern smartphone cameras are frequently equipped with relatively large image sensors (often up to 1 inch sensor diameter) and sharp lenses. Such a setup typically leads to an improved image quality. Firstly, the signal-to-noise ratio increases with an increased sensor size. Secondly, sharp lenses allow for an increased level of details across a wide range of use cases, such as different resolutions and zoom factors.

However, both of the discussed features lead to aliasing, a signal corruption phenomenon occurring during the analog-to-digital conversion (sampling) process. Depending on capture parameters and input content, the spatial sampling rate may become insufficient and fall below the well-known Nyquist limit. As a consequence, a high-frequency component of the input signal spectrum is getting folded onto the rest of it producing non-existent harmonics. Thus, artefacts are generated in the captured images.

The use of color filter arrays (CFA) required to capture colored images further increases the likelihood to end up with an aliased signal. In particular, CFA introduces a phase shift which differs per color channel (R, G, B) leading to bright low frequency and unnaturally looking color fringes appearing in image areas containing high-frequency details (also referred to as colored moiré).

From a signal processing standpoint, the aliasing problem is commonly solved by the use of anti-aliasing filters prior to the analog-to-digital conversion (ADC), wherein a low-pass filter is applied to attenuate the extreme high frequencies in the input signal spectrum falling beyond the Nyquist limit.

In the field of cameras and sensors, such a filter is a lens applied to make the resulting image blurry, so that its use would be simply equivalent to reducing the sharpness of the camera optics.

However, as far as the bandwidth of an anti-aliasing filter naturally depends on the sampling rate, the parameters of such an optical low-pass filter would then depend on the capture parameters (e.g. resolution, sensor binning mode and/or zoom factor) in order to reduce the details loss while keeping the filter performance. This leads to a more complex and more expensive optical system design and quickly becomes impractical.

Once the input signal is sampled, there is no way to perfectly reconstruct its high-frequency counterpart. Neither it is possible to fix the damaged part of its spectrum with a common filtering technique. The fake harmonics become an integral part of the content and distinguishing them from the actual image content is a hard, ill-posed and relatively little researched problem.

Modern artificial neural networks (ANN) have shown a superior capacity in learning natural image priors applicable in different reconstruction problems, such as image noise removal or deblurring. The present invention suggests applying an ANN model to reconstruct image areas corrupted by strong colored moiré.

The related arts, KR20200084419A, BOLIN LIU ET AL:"Demoireing of Camera-Captured Screen Images Using Deep Convolutional Neural Network", ARXIV.ORG,CORNELL UNIVERSITY LIBRARY, 201 OLIN LIBRARY CONRNELL UNIVERSITY INTACA, NY 14853, 11 April 2018 (2018-04-11), XP80869609A, and US2022132001A1 disclose methods for removing moiré included in an image.

### Summary

In order to solve the above-discussed problem, the present invention suggest implementing a method for generating a moiré-corrected image file according to independent claim 1.

Implementing the ANN according to the present invention allows an efficient image processing without the need for any hardware filtering. The ANN is trained to compute a raw image file being moiré corrected. The ANN is trained by learning from previously provided training data comprising non-corrected and corrected image files. According to the present invention, a raw image/CFA image is used as the input of the ANN and an image of the same kind is output by the ANN. By choosing this "raw-to-raw" approach, the present invention is compatible with the existing hardware, such as an image signal processor (ISP), or an existing software-implemented IPU, wherein the engineering effort required to implement the method according to the present invention in camera devices is significantly reduced.

Furthermore, the present invention allows to correct moiré effects at the beginning of the imaging pipeline. This is advantageous, since the processing units in typical IPUs impact the nature of the signal (demosaicking, white balance and color correction, denoising, tone mapping, etc.), thus significantly changing the underlying signal statistics by mixing neighboring pixel values in a complex data-dependent way. In contrast thereto, by applying the ANN on raw images, only the properties of the image sensor will influence the image processing.

Preferably, the image sensor may be implemented as a charge-coupled device (CCD) or a complementary metal-oxide-semiconductor (CMOS) sensor.

The method further comprises providing the pre-trained ANN by performing the following steps:
- training the ANN by using training data, wherein the training data comprises pairs of training images, and each pair of training images comprises a first training raw image file representing a training image without any blurred region, and a second training raw image file representing a training image with a blurred region.

Hence, an efficient training process is provided, allowing the ANN to learn from previously captured training image data.

Preferably, the existing training data may be augmented by rotating or scaling the available image comprised in the training data. Also, the training data may be augmented by adding noise, color shifts or by introducing changes with regard to the brightness or sharpness of the available images.

Furthermore, the training data may comprise extracts or sections of the available training images representing an area of the original training images.

According to some embodiments, the blurred region may be identical with the entire image region. In other words, the dimensions of the blurred region and the dimensions of the entire image may be identical.

According to some embodiments, the blurred region may be smaller than the entire image. In other words, the dimensions of the blurred region may be smaller than the dimension of the entire image. Hence, the moiré correction may be performed selectively only with regard to those regions of the image where the artefacts are expected or detected.

The first training raw image file is generated by applying a color filter array (CFA) on a training RGB image file. Hence, the first training raw image file can be generated efficiently from the training RGB image file.

The second training raw image file is generated by applying an anti-aliasing filter on the training RGB image file and by applying a CFA on the anti-aliasing filtered training RGB image file. Hence, the second training raw image file can be generated efficiently from the training RGB image file. According to this embodiment, the training data may be provided with high computational efficiency, while the first and the second training raw image files can be computed from a single training RGB image file.

Preferably, a loss function of the ANN may be computed in the raw image domain. Preferably, a loss function of the ANN may be computed in the RGB image domain. Preferably, the ANN is implemented as a convolution neural network (CNN). Experimental work has shown that implementing a CNN leads to rather good results in the application of moiré-correction.

In order to solve the above-discussed problem, the present invention further suggests a camera device according to independent claim 5.

Preferably, the processing unit is further configured to:
- train the ANN by using training data, wherein the training data comprises pairs of training images, and each pair of training images comprises a first training raw image file representing a training image without any blurred region, and a second training raw image file representing a training image with a blurred region.

The processing unit is configured to generate the first training raw image file by applying a color filter array (CFA) on a training RGB image file.

The processing unit is configured to generate the second training raw image file by applying an anti-aliasing filter on the training RGB image file and by applying a CFA on the anti-aliasing filtered training RGB image file.

Preferably, the processing unit is configured to compute a loss function of the ANN in the raw domain. Raw image files describe the images directly generated by the image sensor. Raw image files are not processed by an image processing unit and comprise an unaltered and native version of the captured image data. In order to be able to be displayed on a display device, raw image files are processed by an image processing unit in order to obtain an RGB file, such as an JPEG or a PNG file. Typically, during this processing, process steps for demosaicking, white balancing and noise reduction, etc. are conducted.

Preferably, the processing unit is configured to compute a loss function of the ANN in the RGB domain.

Preferably, the ANN is implemented as a convolution neural network (CNN).

### Brief description of the drawings

In the following, reference will be made to the accompanying drawings which show exemplary embodiments of the present invention, wherein the attached figures show the following:
Fig. 1 a schematic representation of an embodiment of the method according to the present invention,
Fig. 2 a schematic representation of an embodiment of the camera device according to the present invention,
Fig. 3 a schematic representation for a first embodiment for training and using an artificial neural network,
Fig. 4 a schematic representation for a second embodiment, which is not according to the claimed invention, for training and using an artificial neural network,
Fig. 5 a schematic representation of the process for generating training and validation data according to some embodiments of the present invention,
Fig. 6 a schematic representation of the loss function design according to some embodiments of the present invention,
Fig. 7 the result achieved by a first embodiment of the method according to the present invention, and
Fig. 8 the result achieved by a second embodiment of the method which is not according to the present invention.

### Detailed description

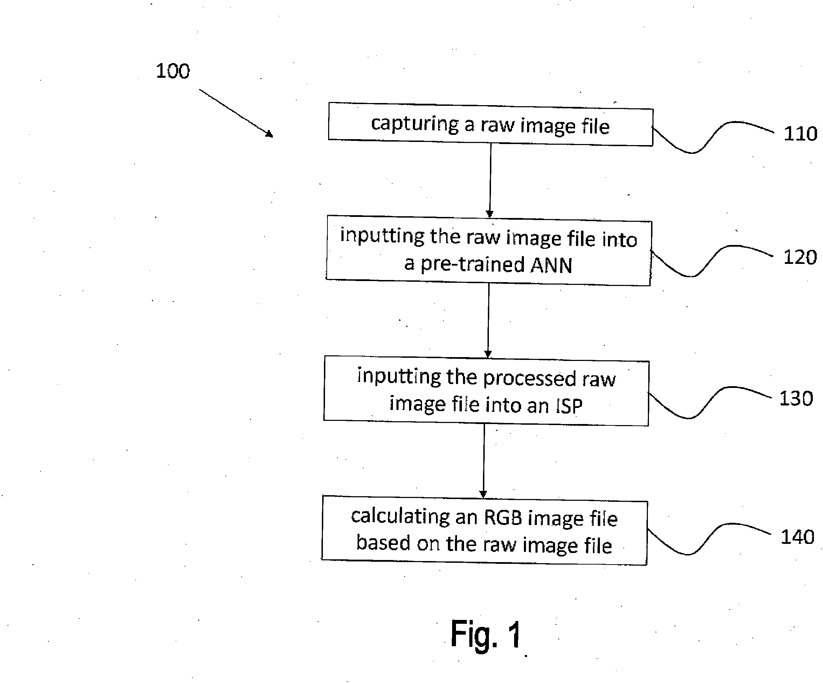

In Fig. 1, an embodiment of the method according to the present invention is schematically illustrated. In a first method step 110, a raw image file is captured using an image sensor. Preferably, the image sensor may be a CCD or a CMOS image sensor. The captured raw image file represents an unfiltered file with no additional image processing applied to the image file. In a second step 120, the captured raw image file is input into a pre-trained artificial neural network (ANN). The ANN is configured to output a computed raw image file representing an image with a blurred region based on the input raw image file. The ANN is trained in advance to be used by providing training data. Preferably, the training data comprises more than 1000 or 10000 raw image files provided as pairs of raw image files. Each pair of training raw image files may comprise a first training raw image file representing a training raw image without any blurred region (also referred to as an unprocessed training raw image file) and a second training raw image file representing a training raw image file with a blurred region (also referred to as a processed or a filtered training raw image file). In a third step 130, the raw image file computed by the ANN is input into an image processing unit, which may be an image signal processor (ISP) according to some embodiments. The IPU is configured to perform several processing steps for processing the input raw image file, such as demosaicking, noise reduction and image sharpening. Hence, in a fourth step 140, the IPU calculates (i. e. computes) an RGB image file based on the input raw image file.

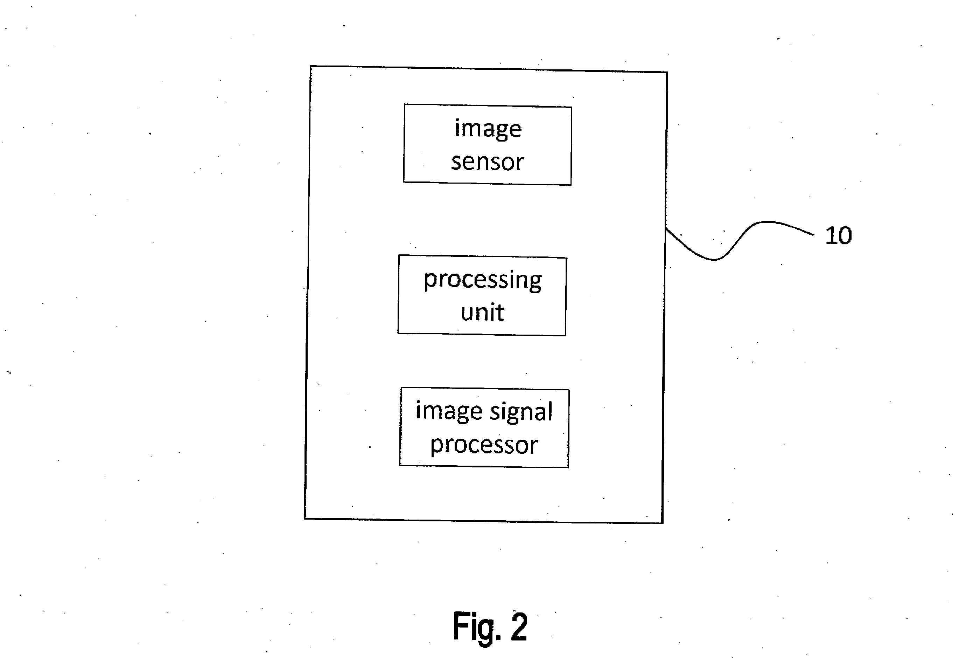

In Fig. 2, an embodiment of the camera device 10 according to the present invention is schematically represented. The camera device 10 comprises an image sensor, a processing unit and an image processing unit (IPU), which may be implemented as a stand-alone image signal processor (ISP) or a software-implemented function. The image sensor is configured to capture a raw image file. The processing unit is configured to input the captured raw image file into the pre-trained ANN and to input the raw image file computed by the ANN into the IPU. Finally, the IPU is configured to calculate an RGB image file based on the raw image file computed by the ANN.

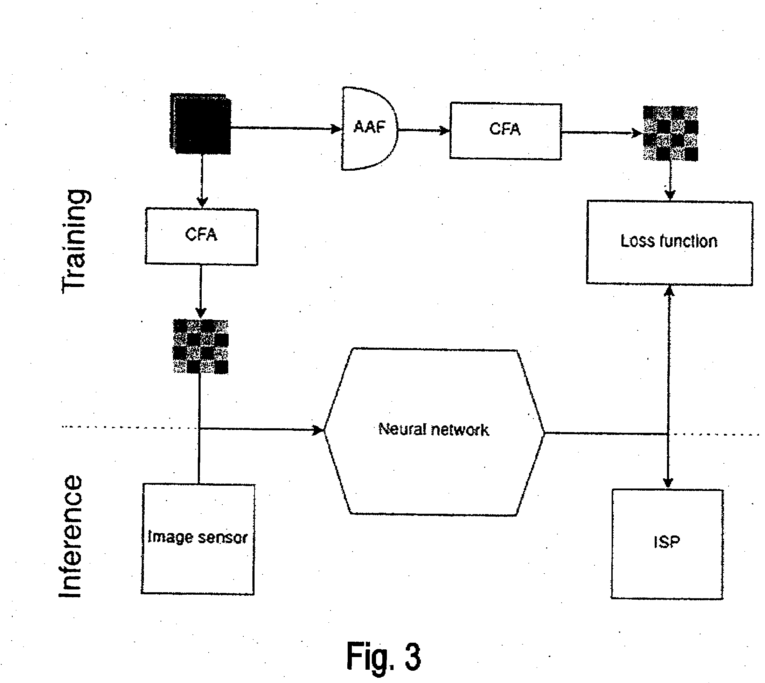

In Fig. 3, a first embodiment for training and using an ANN according to the present invention is illustrated. According to the first embodiment, the ANN is used to simulate the presence of an optical anti-aliasing filter. It is first considered that ANN receives a raw (CFA) image as an input and produces an image of the same kind as an output. The model is trained to reconstruct a blurred version of the input, i.e., as if an optical low-pass filter was present in the camera optics. Fig. 3 illustrates a simplified training procedure and the use of the model for inference in production.

The ANN is trained to apply an anti-aliasing filter (AAF) to a signal which is already sampled. This cannot be achieved with a conventional filtering technique (e.g., digital blur), since in aliased image areas low-pass filtering and sampling steps are not interchangeable.

The model emerging in the described setup can be used to preprocess raw images by applying the digital AAF (correcting colored moiré but making the raw image more blurry). The corrected raw image is later fed into the traditional IPU, which may be implemented as an ISP according to some embodiments. A traditional IPU is not tailored to correct colored aliasing, but usually has built-in advanced sharpening mechanisms. Hence, the IPU allows to compensate for the sharpness loss induced by the digital AAF.

In addition, the suggested model can also be used as a part of a multi-frame approach to render the out-of-focus frame numerically instead of capturing it, which would greatly simplify the ghost artifacts management, images registration, integration into the camera firmware and may reduce the capture time as well. Using the first embodiment, an out-of-focus frame synthesis from an already captured and potentially aliased sharp in-focus frame is enabled. This reduces the overall capture time and avoids the need of complex image stitching and anti-ghost processing blocks.

Furthermore, using a trained ANN according to the described scheme is applied at the beginning of an image acquisition pipeline with no need of complex adjustment of its remaining parts and a minimal engineering effort required for the integration.

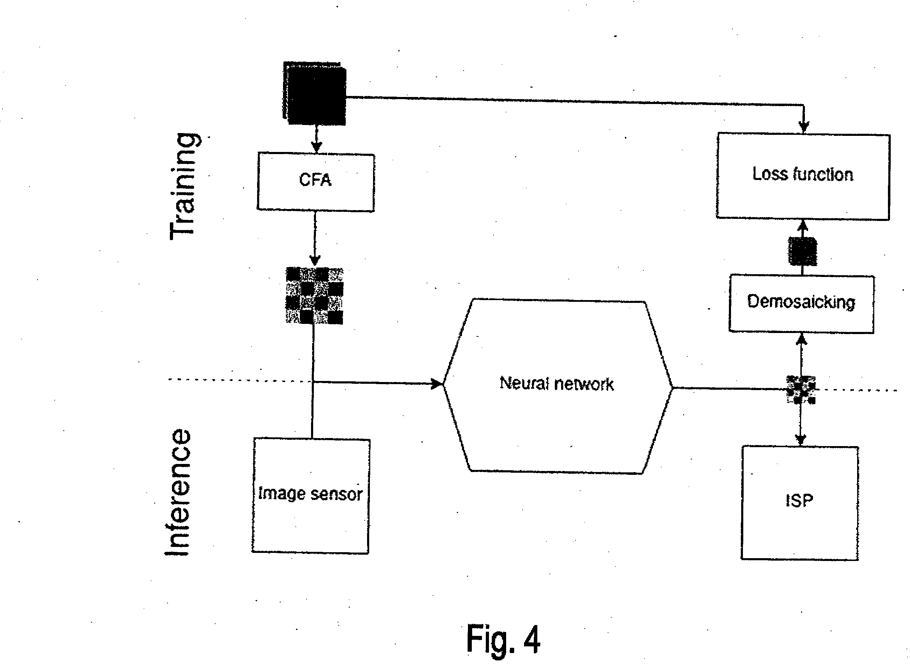

In Fig. 4, a second embodiment for training and using an ANN which is not according to the present invention is illustrated. The setup described above and illustrated in Fig. 3 allows to simulate a less sharp optical system, while the ultimate goal would be to keep the image sharp whenever possible (e.g., in the image areas that do not contain high frequencies prone to aliasing) and to apply a low-pass filter locally otherwise. A model acting in such a way can be seen as an adaptive digital anti-aliasing filter.

A way to define the behavior of such a filter would be to reconstruct the RGB image taking its CFA version as input. The initial problem is then cast as a demosaicking problem, which does not fit the present integration constraints as explained above, since the existing demosaicking in the IPU cannot simply be replaced. For this reason, a different problem is considered: demosaicking is applied to the model output and the loss function is computed in the RGB domain. In this setup, the model is viewed as a demosaicking preprocessing step, and its training requires knowledge of the demosaicking algorithm behavior as detailed below. Apart from this, in a production scenario, the model is used in the exact same way as discussed above (raw-to-raw). However, this time it reconstructs the sharp aliasing-free raw image directly, which enables its application in general photo use cases.

The second embodiment described in Fig. 4 may be employed in general photo capture use cases to remove colored moiré from a single image in a blind end-to-end fashion. Differently to an optical AAF, it allows to keep sharp image areas which are not corrupted by colored moiré.

Moreover, as discussed with regard to the first embodiment, using a trained ANN according to the described scheme is applied at the beginning of an image acquisition pipeline with no need of complex adjustment of its remaining parts and a minimal engineering effort required for the integration.

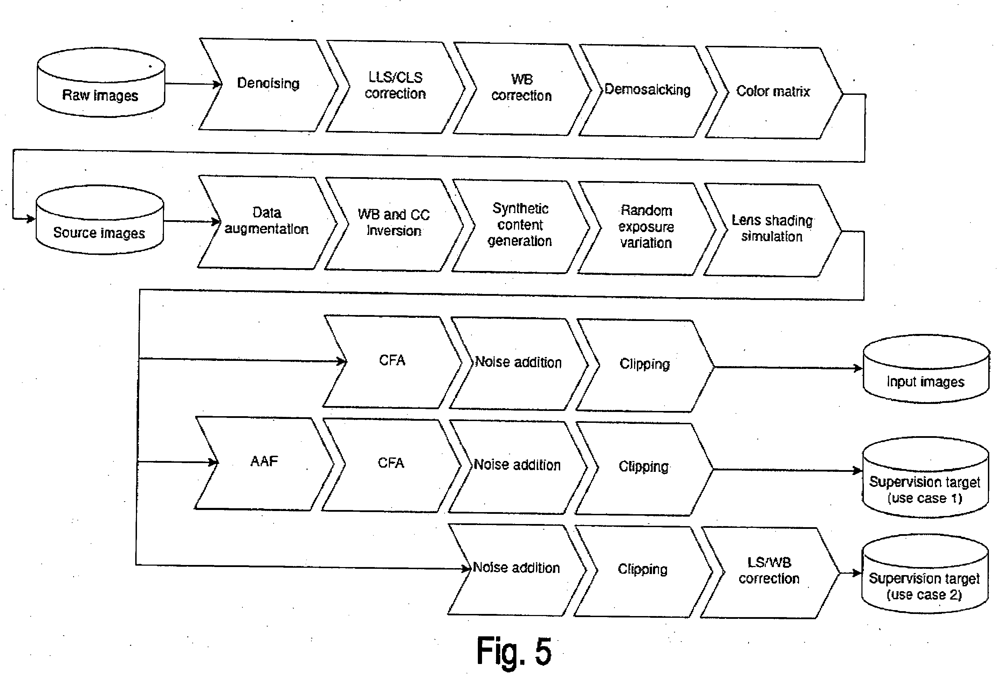

In Fig. 5, the process for generating training and validation data according to preferred embodiments of the present invention is illustrated. Due to the problem specificity and the use of raw images, there is no or only very little data available to train the ANN models described above. Therefore, the dataset can preferably be built using the process illustrated in Fig. 5. As a consequence, a highly efficient process for generating training and validation data can be ensured.

The most part of the process is common for the two presented embodiments illustrated in Figs. 3 and 4. The outcome of this generation process is a set of images with the following three counterparts for every entry: (a) an input image corrupted with moiré, (b) a first embodiment supervision target, and (c) a second embodiment supervision target.

The training and validation data generation requires a set of RGB images further referred to as source images allowing to obtain realistic raw images by a numerical simulation. To render the source images, a manually selected set of moiré-free raw images is taken with no clipping and they are processed with a conventional photo processing software performing noise removal, lens shading and white balance correction, demosaicking and a minimal color correction (color matrix). The resulting source images are of a particular interest due to the following properties:
- The source images are noise-free and contain no aliasing, which allows to process (mainly resample) them freely for data augmentation purposes.
- The source images are in a perceptually-normalized color space, i.e., have white balance and color correction applied, which makes their color statistics independent of the scene illuminant. As far as no complex color mapping has been applied, and no clipping is present in the input images, it may be considered to invert image colors back to the raw sensor colors according to an arbitrarily chosen illuminant and a given sensor, by using their corresponding white balance scales and color matrix. By doing so, one ends up with RGB noise-free images whose colors look like realistic raw image colors.
- By applying then a CFA pattern and adding a synthetic noise following a given sensor noise model, one ends up with a realistic raw image. Depending on the content of a given source image, applying the CFA pattern may lead to aliasing and colored moiré.

The source images then may preferably undergo the following processing to get input and supervision target images for the two embodiments described above:
- A set of common data augmentation operations can be applied first: random translation, rotation, scaling, perspective distortions, and random color variations. By these measures, the dataset diversity can be increased and overfitting may be avoided.
- The inverse color processing may be done next in order to get to the raw sensor colors. The illuminant can be picked randomly from a predefined set of illuminants.
- Next, in order to ensure a certain amount of aliasing and colored moiré, synthetic high-frequency patterns are rendered on top of the source images. To do so, one may start from a regular grid of pixels with intensity values quickly changing from pixel to pixel, and apply a set of random geometric deformations to increase diversity.
- To make the resulting images look yet more realistic, one may apply random exposure variations and simulate lens shading.

At this point, the data pipeline may split into three branches as follows:
1. The neural network **input images** may be generated by a simplified sensor simulation process consisting in applying CFA, adding image noise and mimicking sensor clipping. These images are prone to colored moiré due to the synthetic high-frequency content passing through the CFA subsampling.
2. To get **supervision targets for the first embodiment** (using a neural network to simulate an AAF, see Fig. 3) the image may be smoothed with a linear low-pass filter and may then go through the same sensor simulation. In this case, the resulting images do not have colored moiré thanks to this low-pass filter acting prior to the CFA sampling process and attenuating the high frequency signal component.
3. **Supervision targets for the second embodiment** (using a neural network to reconstruct sharp moiré-free images, see Fig. 4) may be obtained without applying CFA, but with an additional color processing step to make the images look similar to the demosaicked images. In this case, the resulting images do not have colored moiré, as far as the source images do not have it and no CFA subsampling is involved in the current data flow branch.

Apart from the above, different variants of autoencoder architecture commonly used in imaging tasks can be used in accordance with the present invention. Besides the described dataset generation process and the loss function, the further training setup includes standard procedures which are known from the prior art. For instance, a common deep learning framework (PyTorch), a conventional optimizer and a learning rate scheduling policy may be implemented.

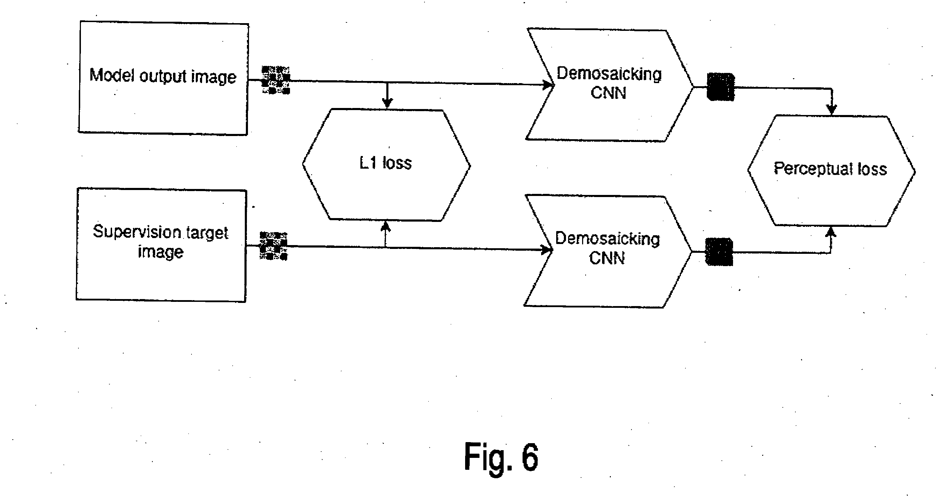

In Fig. 6, the loss function design according to the first embodiment shown in Fig. 3 is illustrated. A simple loss function can be used to train a model within the first embodiment as illustrated in Fig. 3, e.g. L1 difference between the model output and the supervision target in the CFA domain. While this already allows to train the model, an improved approach will be presented in the following.

Perceptual loss is known to enable better reconstruction quality for different imaging tasks (e.g., super-resolution or denoising, see J. Johnson, A. Alahi, and L.

Fei-Fei: "Perceptual losses for real-time style transfer and super-resolution. ", European conference on computer vision, Springer, Cham, 2016). It uses a pretrained convolutional neural network to map images to latent feature spaces and to minimize the difference between images there. However, it cannot be applied to raw images and requires RGB inputs. This implies a need for a demosaicking algorithm as a part of the loss function. Its use in the loss function after the model to be trained requires its ability to backpropagate the gradients. In addition, the best option for such an algorithm would be the actual demosaicking used in the IPU.

To fulfill this need, first another neural network can be trained for the demosaicking task, which approximates the demosaicking unit in the IPU. This may be done by taking a set of raw photos captured with a device of interest and using a special IPU simulation software provided by the IPU vendor implementing the exact same algorithm as in the IPU. The photos are processed with the simulation software which has the option to dump inputs and outputs of the demosaicking unit. The dumped content may then be used as its inputs and supervision targets to train a convolutional neural network performing the demosaicking. However, its specific architecture as well as the training details are considered out-of-scope with regard to the present invention.

Such a demosaicking algorithm fits the requirement: it allows for the gradient backpropagation to train the model upstream and it provides a fairly precise approximate of the original IPU demosaicking unit. Note that its weights may be frozen so that it does not evolve itself during the moiré correction model training.

Applying the demosaicking CNN to the model output and the supervision target provides the RGB images which can be fed to the perceptual loss. One may follow a common recipe in literature consisting in summing up an L1 loss term and a VGG-based perceptual loss term.

According to the second embodiment illustrated in Fig. 4, a neural network may be used for end-to-end moiré correction in raw images. According to this embodiment, the reconstruction of a sharp moiré-free output also makes use of the demosaicking CNN.

A simple way would be to apply a similar loss function (L1 + perceptual loss) in the RGB domain. The demosaicking CNN in this case only needs to be applied to the model output, as far as the supervision target in this embodiment is already an RGB image.

However, experimental work underlying the present invention has shown that involving the first embodiment supervision target together with the second embodiment supervision target leads to a more powerful moiré correction. To explain this, the two images are further referred to as blurry target and sharp target respectively. This notation corresponds to the amount of blur present in the two images.

Namely, it is required to minimize the difference between the model output image and the sharp target as much as possible. When the model is unable to further improve on minimizing this quantity, it is required to minimize the difference between the model output and the blurry target. This can be put in a formula as follows: if *a* is a per-pixel difference with the sharp target and *b* is a per-pixel difference with the blurry target, the compound quantity to minimize per-pixel prioritizing *a* over *b* would be *a(1 + b).*

According to the present invention, L1 per-pixel differences may be used for *a* and b. Such a process is one possible formal definition of a local adaptive AAF, as far as the output image becomes smoothed in areas where it is impossible to reconstruct high frequency content due to the aliased input signal. The same demosaicking CNN is naturally involved in this process in the same way as described above.

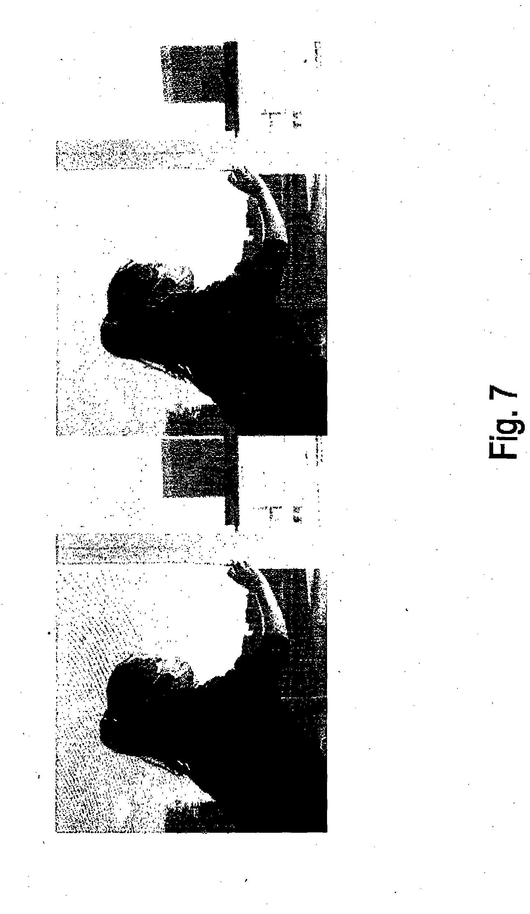

Fig. 7 shows the result achieved by the above-discussed first embodiment of training and using an ANN as illustrated in Fig. 3. As can be seen in Fig. 7, the input image presented on the left side comprises a notable moiré pattern. The processed version computed using an ANN is shown on the right side of Fig. 7. As can be seen in Fig. 7, the moiré pattern in the processed version is significantly reduced. Still, in particular when zoomed-in, the processed image appears blurrier than the original image.

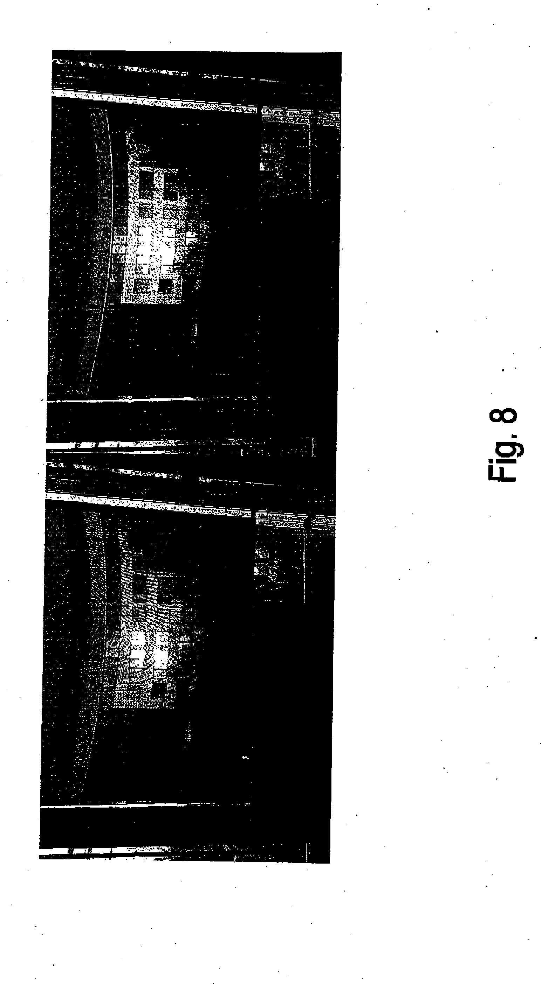

Fig. 8 shows the result achieved by the above-discussed second embodiment of training and using an ANN as illustrated in Fig. 4. Again, the input image is shown on the left side and the processed image is shown on the right side. As can be seen from Fig. 8, the moiré pattern is significantly reduced after the processing. In addition, the processed image remains sharp, even after zooming into the processed image.

### List of abbreviations

- AAF: anti-aliasing filter
- ADC: analog-to-digital conversion
- CFA: color filter array
- CNN: convolutional neural network
- IPU: image processing unit
- ISP: image signal processor
- RAM: random access memory
- RGB: red, green, blue

## Claims

1. A method for generating a moiré-corrected image file, comprising the following steps:
- capturing (110) a raw image file using an image sensor;
- inputting (120) the captured raw image file into a pre-trained artificial neural network, ANN, wherein the ANN is configured to output a computed raw image file representing an image with a blurred region based on the input raw image file;
- inputting (130) the computed raw image file into an image processing unit, IPU; and
- calculating (140), by the IPU, an RGB image file based on the computed raw image file;
further providing the pre-trained ANN by performing the following steps:
- training the ANN by using training data, wherein the training data comprises pairs of training images, and each pair of training images comprises a first training raw image file representing a training image without any blurred region, and a second training raw image file representing a training image with a blurred region;
- wherein the first training raw image file is generated by applying a color filter array, CFA, on a training RGB image file;
- wherein the second training raw image file is generated by applying an anti-aliasing filter on the training RGB image file and by applying a CFA on the anti-aliasing filtered training RGB image file.

2. The method according to claim 1, wherein a loss function of the ANN is computed in the raw domain.

3. The method according to claim 1, wherein a loss function of the ANN is computed in the RGB domain.

4. The method according to any one of claims 1 to 3, wherein the ANN is implemented as a convolution neural network, CNN.

5. A camera device (10) comprising an image sensor, a processing unit, and an image processing unit, IPU, wherein
- the image sensor is configured to capture a raw image file;
- the processing unit is configured to:
- input the captured raw image file into a pre-trained artificial neural network, ANN, wherein the ANN is configured to output a computed raw image file representing an image with a blurred region based on the input raw image file; and
- input the computed raw image file into the IPU; and
- the IPU is configured to calculate an RGB image file based on the computed raw image file;
wherein the processing unit is further configured to:
- train the ANN by using training data, wherein the training data comprises pairs of training images, and each pair of training images comprises a first training raw image file representing a training image without any blurred region, and a second training raw image file representing a training image with a blurred region;
- wherein the processing unit is configured to generate the first training raw image file by applying a color filter array, CFA, on a training RGB image file;
- wherein the processing unit is configured to generate the second training raw image file by applying an anti-aliasing filter on the training RGB image file and by applying a CFA on the anti-aliasing filtered training RGB image file.

6. The camera device (10) according to claim 5, wherein the processing unit is configured to compute a loss function of the ANN in the raw domain.

7. The camera device (10) according to claim 5, wherein the processing unit is configured to compute a loss function of the ANN in the RGB domain.

8. The camera device (10) according to any one of claims 5 to 7, wherein the ANN is implemented as a convolution neural network, CNN.

## Patentansprüche

1. Verfahren zum Erzeugen einer moiré-korrigierten Bilddatei mit den folgenden Schritten:
- Aufnehmen (110) einer RAW-Bilddatei unter Verwendung eines Bildsensors;
- Eingeben (120) der aufgenommenen RAW-Bilddatei in ein vortrainiertes künstliches neuronales Netzwerk, ANN, wobei das ANN dazu ausgebildet ist, eine berechnete RAW-Bilddatei auszugeben, welche ein Bild mit einem unscharfen Bereich basierend auf der eingegebenen RAW-Bilddatei wiedergibt;
- Eingeben (130) der berechneten RAW-Bilddatei in eine Bildverarbeitungseinheit, IPU; und
- Berechnen (140) einer RGB-Bilddatei durch die IPU basierend auf der berechneten RAW-Bilddatei;
weiteres Bereitstellen des vortrainierten ANN durch Durchführen der folgenden Schritte:
- Trainieren des ANN durch Verwenden von Trainingsdaten, wobei die Trainingsdaten Trainingsbildpaare aufweisen, und jedes Trainingsbildpaar eine erste Trainings-RAW-Bilddatei, welche ein Trainingsbild ohne jeglichen unscharfen Bereich wiedergibt, und eine zweite Trainings-RAW-Bilddatei aufweist, die ein Trainingsbild mit einem unscharfen Bereich wiedergibt;
- wobei die erste Trainings-RAW-Bilddatei durch Anwenden eines Farbfilterarrays, CFA, auf eine Trainings-RAW-Bilddatei erzeugt wird;
- wobei die zweite Trainings-RAW-Bilddatei durch Anwenden eines Anti-Aliasing-Filters auf die Trainings-RGB-Bilddatei und durch Anwenden eines CFA auf die anti-aliasing-gefilterte Trainings-RGB-Bilddatei erzeugt wird.

2. Verfahren nach Anspruch 1, bei welchem eine Verlustfunktion des ANN in der RAW-Domäne berechnet wird.

3. Verfahren nach Anspruch 1, bei welchem eine Verlustfunktion des ANN in der RGB-Domäne berechnet wird.

4. Verfahren nach einem der Ansprüche 1 bis 3, bei welchem das ANN als ein Convolution Neural Netwaork, CNN, implementiert ist.

5. Kameravorrichtung (10) mit einem Bildsensor, einer Prozessoreinheit, und einer Bildverarbeitungseinheit, IPU, bei welcher
- der Bildsensor dazu ausgebildet ist, eine RAW-Bilddatei aufzunehmen;
- die Prozessoreinheit dazu ausgebildet ist,
- die aufgenommene RAW-Bilddatei in ein vortrainiertes künstliches neuronales Netzwerk, ANN, einzugeben, wobei das ANN dazu ausgebildet ist, eine berechnete RAW-Bilddatei auszugeben, welche ein Bild mit einem unscharfen Bereich basierend auf der eingegebenen RAW-Bilddatei wiedergibt; und
- die berechnete RAW-Bilddatei in eine Bildverarbeitungseinheit, IPU, einzugeben; und
- die IPU dazu ausgebildet ist, eine RGB-Bilddatei durch die IPU basierend auf der berechneten RAW-Bilddatei zu berechnen;
wobei die Prozessoreinheit ferner dazu ausgebildet ist,
- das ANN durch Verwenden von Trainingsdaten zu trainieren, wobei die Trainingsdaten Trainingsbildpaare aufweisen, und jedes Trainingsbildpaar eine erste Trainings-RAW-Bilddatei, welche ein Trainingsbild ohne jeglichen unscharfen Bereich wiedergibt, und eine zweite Trainings-RAW-Bilddatei aufweist, die ein Trainingsbild mit einem unscharfen Bereich wiedergibt;
- wobei die Prozessoreinheit dazu ausgebildet ist, die erste Trainings-RAW-Bilddatei durch Anwenden eines Farbfilterarrays, CFA, auf eine Trainings-RAW-Bilddatei zu erzeugen;
- wobei die Prozessoreinheit dazu ausgebildet ist, die zweite Trainings-RAW-Bilddatei durch Anwenden eines Anti-Aliasing-Filters auf die Trainings-RGB-Bilddatei und durch Anwenden eines CFA auf die anti-aliasing-gefilterte Trainings-RGB-Bilddatei zu erzeugen.

6. Kameravorrichtung (10) nach Anspruch 5, bei welcher die Prozessoreinheit dazu ausgebildet ist, eine Verlustfunktion des ANN in der RAW-Domäne zu berechnen.

7. Kameravorrichtung (10) nach Anspruch 5, bei welcher die Prozessoreinheit dazu ausgebildet ist, eine Verlustfunktion des ANN in der RGB-Domäne zu berechnen.

8. Kameravorrichtung (10) nach einem der Ansprüche 5 bis 7, bei welcher das ANN als ein Convolution Neural Netwaork, CNN, implementiert ist.

## Revendications

1. Procédé pour générer un fichier d'image à moiré corrigé, comprenant les étapes suivantes consistant à :
- capturer (110) un fichier d'image brute au moyen d'un capteur d'image ;
- entrer (120) le fichier d'image brute capturé dans un réseau neuronal artificiel pré-entraîné, dit ANN, dans lequel l'ANN est configuré pour délivrer un fichier d'image brute calculé représentant une image avec une région floue sur la base du fichier d'image brute entré ;
- entrer (130) le fichier d'image brute calculé dans une unité de traitement d'image, dite IPU ; et
- calculer (140), par l'IPU, un fichier d'image RVB sur la base du fichier d'image brute calculé ;
utiliser en outre l'ANN pré-entraîné en exécutant les étapes suivantes consistant à :
- entraîner l'ANN au moyen de données d'entraînement, dans lequel les données d'entraînement comprennent des paires d'images d'entraînement, et chaque paire d'images d'entraînement comprend un premier fichier d'image brute d'entraînement représentant une image d'entraînement sans aucune région floue, et un second fichier d'image brute d'entraînement représentant une image d'entraînement avec une région floue ;
- dans lequel le premier fichier d'image brute d'entraînement est généré par une application d'une matrice de filtres colorés, dite CFA, à un fichier d'image RVB d'entraînement ;
- dans lequel le second fichier d'image brute d'entraînement est généré par une application d'un filtre antirepliement de spectre au fichier d'image RVB d'entraînement et par une application d'une CFA au fichier d'image RVB d'entraînement ayant fait l'objet d'une application de filtre antirepliement de spectre.

2. Procédé selon la revendication 1, dans lequel une fonction de perte de l'ANN est calculée dans le domaine brut.

3. Procédé selon la revendication 1, dans lequel une fonction de perte de l'ANN est calculée dans le domaine RVB.

4. Procédé selon l'une quelconque des revendications 1 à 3, dans lequel l'ANN est implémenté en tant que réseau neuronal à convolution, dit CNN.

5. Dispositif caméra (10), comprenant un capteur d'image, une unité de traitement, et une unité de traitement d'image, dite IPU, dans lequel
- le capteur d'image est configuré pour capturer un fichier d'image brute ;
- l'unité de traitement est configurée pour :
- entrer le fichier d'image brute capturé dans un réseau neuronal artificiel pré-entraîné, dit ANN, dans lequel l'ANN est configuré pour délivrer un fichier d'image brute calculé représentant une image avec une région floue sur la base du fichier d'image brute entré ; et
- entrer le fichier d'image brute calculé dans l'IPU ; et
- l'IPU est configurée pour calculer un fichier d'image RVB sur la base du fichier d'image brute calculé ;
dans lequel l'unité de traitement est en outre configurée pour :
- entraîner l'ANN au moyen de données d'entraînement, dans lequel les données d'entraînement comprennent des paires d'images d'entraînement, et chaque paire d'images d'entraînement comprend un premier fichier d'image brute d'entraînement représentant une image d'entraînement sans aucune région floue, et un second fichier d'image brute d'entraînement représentant une image d'entraînement avec une région floue ;
- dans lequel l'unité de traitement est configurée pour générer le premier fichier d'image brute d'entraînement par une application d'une matrice de filtres colorés, dite CFA, à un fichier d'image RVB d'entraînement ;
- dans lequel l'unité de traitement est configurée pour générer le second fichier d'image brute d'entraînement par une application d'un filtre antirepliement de spectre au fichier d'image RVB d'entraînement et par une application d'une CFA au fichier d'image RVB d'entraînement ayant fait l'objet d'une application de filtre antirepliement de spectre.

6. Dispositif caméra (10) selon la revendication 5, dans lequel l'unité de traitement est configurée pour calculer une fonction de perte de l'ANN dans le domaine brut.

7. Dispositif caméra (10) selon la revendication 5, dans lequel l'unité de traitement est configurée pour calculer une fonction de perte de l'ANN dans le domaine RVB.

8. Dispositif caméra (10) selon l'une quelconque des revendications 5 à 7, dans lequel l'ANN est implémenté en tant que réseau neuronal à convolution, dit CNN.
